# EUROPEAN PATENT APPLICATION

(11) **EP 1 571 557 A1**
(43) Date of publication of application: **07.09.2005**
(21) Application number: 03773438.1
(22) Date of filing: 18.11.2003
(51) Int. Cl.: G06F 13/00

(54) **A METHOD OF SENDING COMMAND AND DATA TO MOVABLE STORAGE DEVICE**

(30) Priority: 18.11.2002 CN 02152021
(71) Applicant: Netac Technology Co., Ltd., Guangdong 518057 (CN)
(72) Inventor: DENG, Guoshun c/oChina Acad.of Sc. & Tech, Shenzhen, Guangdo 518057 (CN); CHENG, Xiaohua c/oChina Acad. of Science & Tech, Shenzhen, Guangdo 518057 (CN); XIANG, Feng c/oChina Acad. of Science & Tech, Shenzhen, Guangdo 518057 (CN)
(74) Representative: Ebner von Eschenbach, Jennifer
(86) International application number: PCT/CN2003/000976
(87) International publication number: WO 2004/046937

(57) **Abstract**

The present invention provides a method for sending commands and/or data to a mobile storage device, wherein the application sets an identification mark for commands and/or data, and a data packet is formed of the identification mark and the commands and/or data; the application sends via the operating system to the mobile storage device the data packet and the write command according to the standard write command format provided by the operating system; the mobile storage device receives the write command and the data packet sent by the operating system, interprets and acquires the commands and/or data in the data packet according to the identification mark; the mobile storage device performs the corresponding operation according to the commands and/or data and sends the operation result to the application via the operating system. The method that the application sends the commands and/or data to the mobile storage device resolve the issue in sending the commands and/or data of the standard operation format in the current art, and broadens a new application. Also, the present method does not require the driver setup for the mobile storage device. In other words, it is plug-and-play and convenient to the user.

## Description

### TECHNICAL FIELD

The present invention relates to digital data processing, more particularly to a method for sending commands and/or data to a mobile storage device.

### BACKGROUND ART

With the continuous development of computer techniques, the requirement for data storage, and the devices thereof, has increased, especially for the data mobile storage devices. In recent years, the rapid development of the semiconductor storage technique opened up a new space for the field of data mobile storage. A Chinese patent, No. ZL 99117225.6, entitled "Method for Flash electronic external storage of data processing system and the device thereof", discloses a Flash Memory as the method and device for the semiconductor storage of the storage medium. This has been accepted by many users because of advantages such as small volume, large capacity, high speed access, portability, stable performance, durability, no drive, plug-and-play and the convenience to be used as the storage disk in the computer, and of which the application is diffusing.

However, when the user enters the Microsoft Windows® operating system (OS) with non-administrator permission (e.g., MS-Windows 2000, MS-Windows XP, etc.), the mobile storage device in the prior art (including the semiconductor storage device) will not allow the non-administrator user to perform the device control command for operating the mobile storage device. This occurs because Microsoft Windows® OS limits the hardware operation of the non-administrator user so that the device operation command (e.g., SCSI command) cannot directly be sent to the device. This, then, prevents the user from performing the corresponding device control operation for the mobile storage device under the non-administrator mode. For instance, the user cannot verify the access password of the mobile storage device, modify the password of the mobile storage device, perform the switching of the device state, format the mobile storage device, regulate the capacity of the respective data disks in the mobile storage device, or obtain the device internal information of the mobile storage device. Therefore, the user without administrator permission is highly inconvenienced, which limits the popularization and the application of the mobile storage device.

### SUMMARY OF THE INVENTION

The object of the present invention is to resolve the problem of the above-mentioned prior art, to provide a method for sending commands and/or data to the mobile storage device, to allow users (including non-administrator) to send commands and/or data to the mobile storage device under the operating system, and perform the device control operation for the mobile storage device.

The object of the present invention can be realized by the following technical solutions.

A method for sending commands and/or data to a mobile storage device is provided, which includes setting an application running in the operating system. The following steps explain how the application is used to send information (commands and/or data) to the mobile storage device.
1) the application sets an identification mark for the information, forming a data packet;
2) the application sends the data packet together with a write command according to the standard write command format provided by the operation system to the mobile storage device through the operating system;
3) the mobile storage device receives the write command and the data packet sent by the operating system;
4) the mobile storage device interprets and obtains the information in the data packet based on the identification mark;
5) the mobile storage device executes the corresponding operation according to the commands and/or data and sends the operating result to the application via the operating system.

The present invention resolves the issues from sending information (commands and/or data) using the present technique by using the application to send this information to the mobile storage device. It broadens the new application, allows the non-administrative user to send the hardware device control command to the mobile storage device as the administrative user, and allows the complete control of the hardware device for the mobile storage device (such as the switching of different states of the mobile storage device, regulation of the partition capacity, the formatting operation of the mobile storage device, setting the encryption of the system, spreading the function and application of the mobile storage device). Additionally, the present invention method does not need to setup the driver of the mobile storage device, and is plug-and-play and convenient for the user.

### BRIEF DESCRIPTION OF THE DRAWINGS

Figure 1 is a concise hardware block diagram of the connection of the mobile storage device and the host system according to the technical solution of the present invention;
Figure 2 is a concise hardware block diagram of the connection of the semiconductor storage device and the host system according to the technical solution of the present invention;
Figure 3 is a structural diagram of the data packet of the present invention;
Figure 4 is a structural diagram of the user-defined commands and/or data of an embodiment of the present invention;
Figure 5 is a structural diagram of the user-defined commands and/or data when the data is modified according to the present invention;
Figure 6 is a concise flow diagram that illustrates how the operating system sends the device control operation to the mobile storage device according to the prior art;
Figure 7 is a flow diagram of the method for sending the commands and/or data to the mobile storage device according to the method of the present invention;
Figure 8 is a flow diagram that illustrates how the Firmware of the mobile storage device executes the user-defined commands and/or data according to the embodiment of the present invention;

### DETAILED DESCRIPTION OF PREFERRED EMBODIMENTS

Further detailed description of the invention is given hereinafter in connection with the accompanying drawings.

The present invention provides a method for sending commands and/or data to a mobile storage device, including setting an application running in the operating system, wherein the application is used to send the information to the mobile storage device. The method further includes the following steps:
1) the application sets an identification mark for the commands and/or data, forming a data packet;
2) the application sends the data packet, together with a write command, to the mobile storage device through the operating system according to the standard write command format provided by the operating system;
3) the mobile storage device receives the write command and the data packet sent by the operating system;
4) the mobile storage device interprets and obtains the information in the data packet based on the identification mark;
5) the mobile storage device performs the corresponding operation according to the received information and sends the operating result to the application via the operating system.

The operating system in the present invention includes, but is not limited to, Microsoft Windows® OS series and the Mac® OS system of Apple Company (includes, but is not limit to, Windows 98, Windows Me, Windows 2000 Professional, Windows 2000 Server, Windows 2000 Advance Server, Windows XP Professional, Windows XP Home Edition, Windows XP Server, Windows XP Advance Server, Mac OS and subsequent operation systems developed by Microsoft Inc. and Apple Company). It further includes Linux, Unix and variations thereof.

The information (commands and/or data) in the present invention can be standard operation or user-defined. The information in the data packet include, but are not limited to, password verification command, password modification command, storage capacity obtaining command, device internal information obtaining command, write protect setting command, write protect determining command, switching state determining command, device internal information modification command, data position obtaining command, storage disk switching command, formatting command, storage capacity altering command, and the like.

The mobile storage device in the present invention includes, but is not limited to, USB Flash Drive, mobile hard disk, semiconductor mobile storage device, MO disk, ZIP disk, mobile phone and the like. Because the method in the present invention is mainly used for the semiconductor storage device, the embodiment of the present invention is primarily concerned with the use of the semiconductor storage device as the application object.

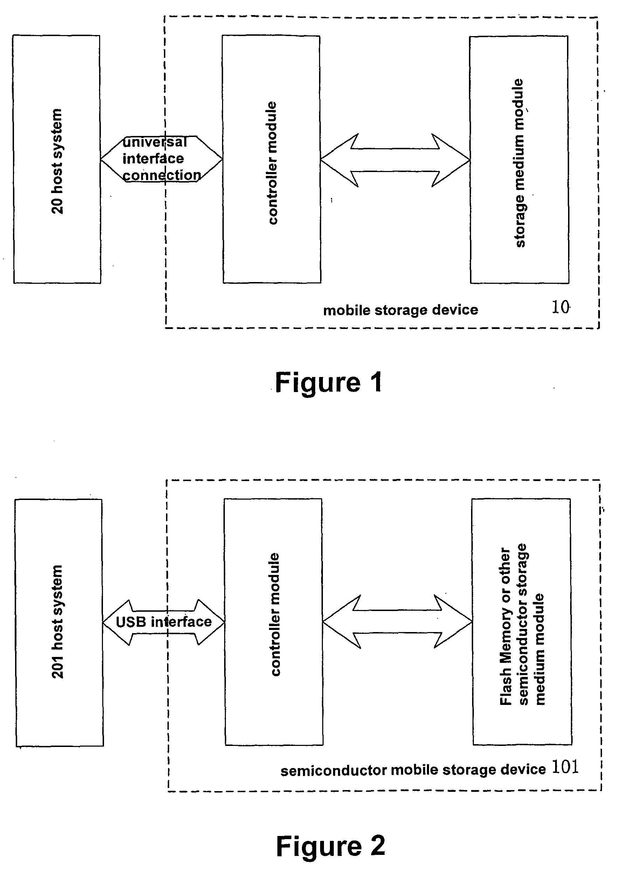

As shown in figure 1, after the mobile storage device 10 is connected with the host system 20 via a universal interface (e.g., USB interface, IEEE1394 interface), the user can perform the data write/read operation for the mobile storage device 10 by use of the operating system, and the user may also perform the device control operation for the semiconductor storage device 10. For instance, the user can send the operation to switch different operation disks (partition), change the access password of the mobile storage device 10, and format and regulate the size of the respective operation disks (partition) of the mobile storage device 10 by use of the application and the like.

The host system in the present system is the data processing device running an operating system, and includes, but not limit to, a personal computer, a small computer, a microcomputer, a palm, a portable computer, a notebook computer, a TabletPC, a data processing workstation, a data processing server, a mobile, a PDA, a SmartPhone, a MP3, a Digital Camera, and the like.

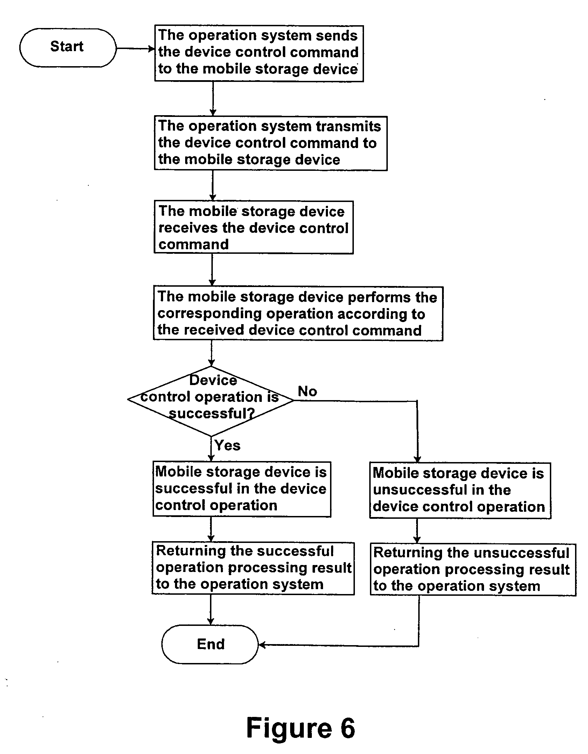

The method for sending commands and/or data to the mobile storage device according to the prior art mainly sends directly the commands and/or data to the mobile storage device according to a standard protocol through an operating system. The mobile storage device performs received commands directly and performs the data read-write operation or other operations; since those are standard techniques in the present system, a detailed description is not provided herein. A concise flow diagram illustrating how the present technical operating system sends the device control operation to the mobile storage device is shown in figure 6.

The user sends a device control operation command, such as an SCSI command for the device control, to the mobile storage device 10 by use of the operating system, and the operating system sends the sent device control operation command through the device driver via the universal interface. At the same time, the mobile storage device 10 receives the device control operation command, and performs the corresponding operation according to the received device control command. For instance, after the mobile storage device 10 passes the device access password verification, it switches to the data storage disk and, therefore, the user can perform the read-write operations for the data stored in the mobile storage device 10 encrypted by the device as for the common data.

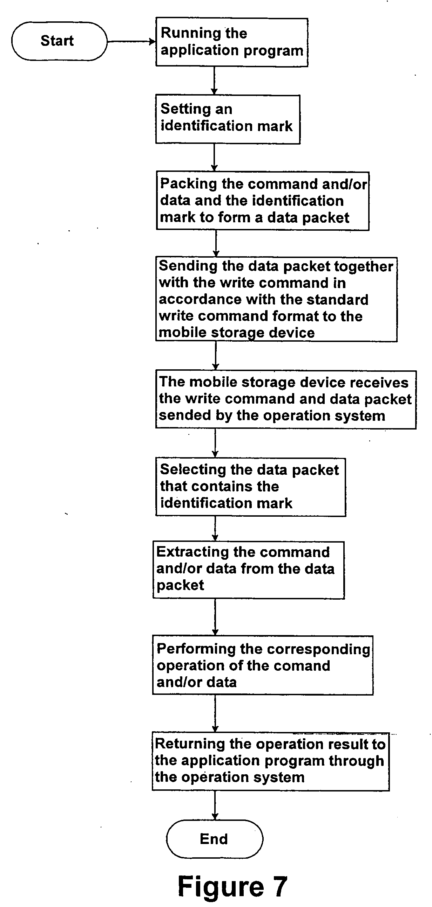

The present invention provides a new method for sending commands and/or data to the mobile storage device, wherein an application running in the operating system is set and the application sends the commands and/or data to the mobile storage device. Therefore, the technical problem whereby the non-administrative user is unable send a device control command to the mobile storage device has been resolved. The program flow diagram of the method of the present invention is shown in figure 7.

The application runs in the operating system. The application can be stored in the host system 20, in the semiconductor mobile storage device 10, and also in other storage devices.

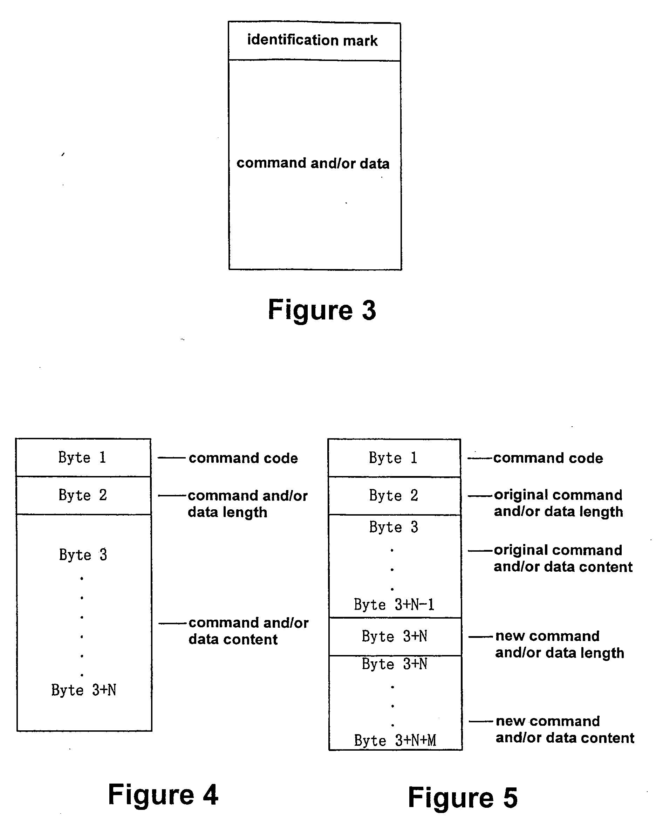

The data packet in the method of the present invention is divided into two types: the data packet containing an identification mark and the data packet lacking an identification mark. The data packet lacking an identification mark is standard data defined by the operating system. The structure of the data packet containing an identification mark is shown in figure 3, including the identification mark and information (commands and/or data). The information may include an end mark, which is unnecessary. The identification mark may be 0x123456789 or other user-defined letters, numbers, or strings with various lengths. The identification mark is used to make the mobile storage device identify the kind of the data packet. In other words, it identifies whether the data packet sent by the operating system carries the data packet containing the identification mark or lacking the identification mark. If the data packet lacks the identification mark, the mobile storage device will dispose of the data packet in accordance with the standard data write format, reject the data packet, or use another method of disposal. If the data packet contains the identification mark, the mobile storage device will perform the corresponding operation in accordance with the mode predefined by the mobile storage device and will return the result of the write command state to the operating system.

Figure 4 is a block diagram of the user-defined commands and/or data according to the embodiment of the invention; that is, Figure 4 is a block diagram of the information shown in figure 3 of the user-defined commands and/or data (Byte 1 is the command code of the user-defined commands and/or data; Byte 2 is the data length of the user-defined commands and/or data; Byte 3 to Byte 3+N are the content of the user-defined commands and/or data). Figure 5 is a block diagram of the user-defined commands and/or data when the data is modified according to the embodiment of the present invention (Byte 1 is the command code of the user-defined commands and/or data; Byte 2 is the data length of the original user-defined commands and/or data; Byte 3 to Byte 3+N-1 are the content of the original user-defined commands and/or data; Byte 3+N is the data length of the new user-defined commands and/or data; Byte 3+N+M is the content of the new user-defined commands and/or data).

The working process of the method for sending the information to the mobile storage device according to the present invention is described as follows.

As shown in figure 7, the application is running in the operating system. First, the application may establish and obtain a file handle by use of API function (e.g., CreateFile function), set an identification mark for the information, and pack the identification mark and commands and/or data together to form a data packet. The structure of the data packet is shown in figure 3. At the same time, the application may send the data packet as the file content, which is to be written in accordance with the write file format, to the operating system by using the API write command function (e.g., WriteFile function). The operating system may arrange the data based on the format defined by the file system, and send the write command and data packet to the mobile storage device.

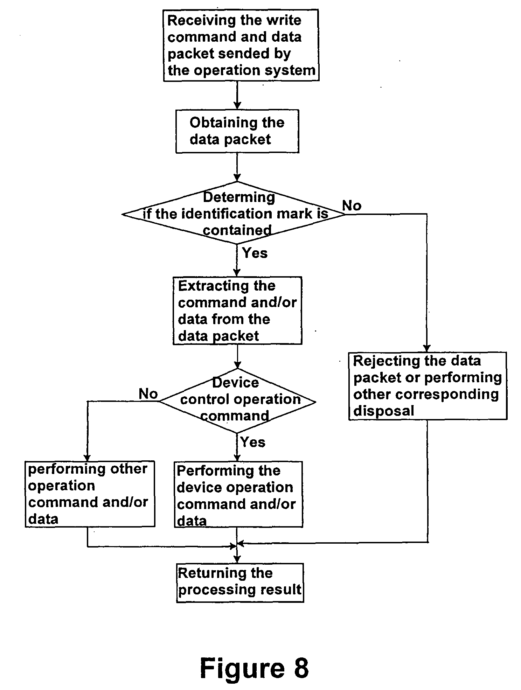

A Firmware is set in the mobile storage device 10 and is used to interpret, convert, control and perform the commands and/or data sent by the host system 20 to perform the function of data access and the like. In the method of the present invention, the Firmware also has the function of identifying, determining, obtaining, and executing the commands and/or data. When the mobile storage device 10 receives the data packet containing the identification mark, and commands and/or data sent by the host operating system using the application via the universal interface, as shown in figure 8, and the Firmware in the mobile storage device may receive the data packet. The Firmware may then determine if the data packet contains the identification mark, the kind of the information (for example, if it is the commands and/or data of the device control operation), and perform different operations according to the determined result.

If data packet received by the mobile storage device contains the identification mark, it is indicated that the data contained in the data packet is the information shown in figure 3 of the present invention. The Firmware will then extract the commands and/or data contained in the data packet, as shown in figure 3. Meanwhile, the Firmware executes the extracted commands and/or data. The mobile storage device 10 may perform the corresponding operation according to the information sent, and return the operated result to the host system 20 via the universal interface. The operating system of the host system 20 sends the returned result to the application, and the application performs the corresponding disposal according to that result.

If the data packet received by the mobile storage device lacks the identification mark, it is indicated that the data contained in the data packet are standard commands and/or data, and the Firmware may perform the corresponding operation according to the commands and/or data in the data packet, or reject the data packet. The mobile storage device 10 returns the operation result or the result of rejecting the data packet to the host system 20 via the universal interface. The operating system of the host system 20 transmits the returned result to the application, and the application performs the corresponding disposal according to that result.

The method of the present invention is especially adapted to the Microsoft Windows® OS to send the device control operation command to the mobile storage device under the non-administrator mode. Under the non-administrator mode of the Windows® operating system (Windows 2000/Windows XP) the user cannot send the device control operation command to the mobile storage device directly except to send the standard read file command or write file command. Therefore, non-administrator user cannot perform the corresponding device control operation of the mobile storage device. Because the method of the present invention sends the write format command (including the commands and/or data which is sent to the mobile storage device in the form of write file) to the mobile storage device, the operating system may regard the write format command and the data as the common data write file. Therefore, the user with non-administrator permission may send the data to the mobile storage device without limit.

When the user sends the device control operation command to the mobile storage device under the non-administrator mode, the application may set the identification mark for the device control operation command and pack them together to form a data packet. The application may regard the data packet as the file content to be written in order to send the data packet to the operating system by use of the command function in accordance with the write file format. The operating system may then arrange the data according to the format defined by the file system, and send the data packet (including the device control operation command) to the mobile storage device.

While the data packet received by the mobile storage device contains the identification mark, the Firmware will extract the device control operation commands and/or data included in the data packet, and at the same time, the Firmware may execute the extracted device control operation information. The mobile storage device 10 performs the corresponding operation according to the device control operation information and returns the operation result to the host system 20 via the universal interface. The operating system of the host system 20 sends the returned result to the application, and the application performs the corresponding disposal according to that result. For example, if the device control operation command extracted from the data packet is the command that regulates the mobile storage device capacity, then the Firmware performs the storage capacity regulating command and returns the operation result to the host system 20. The operating system of the host system 20 sends the returned result to the application, and the application indicates that the capacity regulation operation is successful.

The implementation process that the present invention method uses to send the device password verification command and password modification command to the semiconductor storage device, such as a USB flash disk, is described hereafter.

Figure 2 is a concise hardware block diagram of the connection of the host system 201, and the semiconductor storage device 101 when the method of the present invention is used on semiconductor storage device. In this embodiment, the operating system was Windows 2000/Windows XP, the semiconductor storage device was improved based on the disclosure of the above-mentioned Chinese Patent, No. ZL 99117225.6. The semiconductor storage device was connected with the host system 201 via USB interface to perform the function of data mobile storage, data encryption, and data protection.

The semiconductor storage device 101 controller module had an internal Firmware that could achieve not only the function of data access, data encryption and the like, but also the commands and/or data extracting in the method of the present invention the execution of extracted commands and/or data and the like.

In the present embodiment, the mentioned application was stored in the semiconductor storage device 101. The pros are the application does not need to be installed, and the device is portable and convenient to the user. The application is mainly used for the functions of user password logon, work disk switching, the semiconductor storage device formatting and the like. After the semiconductor storage device 101 was connected to the host system 201, the host operating system performed the standard device configuration for the semiconductor storage device, and created the disk drive letter for the mobile storage device. Since encryption techniques were used in the whole semiconductor storage device, user could not access the semiconductor storage device without passing the password verification.

When the user performed the password verification through running the application, the method of the present invention set the identification mark, such as, 0x123456789 (or other identification marks) by use of API functions.

The identification mark in the present embodiment had 9 bits, and the tenth bit was the commands and/or data. The password identification data packet included the identification mark, the password identification command and the password data. It was sent to the semiconductor storage device by the operating system via USB interface. The data packet file was sent without any limit to the semiconductor storage device, since it was treated by the operating system as a common data file regardless of administration mode.

The invention is further described concerning 0x123456789 as the identification mark herein. The identification mark, however, can also be letters, numbers or character strings of any length. The password verification data packet including the identification mark, 0x123456789, password verification command and password data were sent by the operating system to the semiconductor storage device. Then Firmware in the semiconductor storage device firstly identified the identification mark of the data packet file. If the identification mark was 0x123456789, it was indicated that the data in the data packet was user-defined commands and/or data. Next, the Firmware began to extract the commands and/or data of password verification starting from the tenth byte, and then performed the password verification command. During verification, the Firmware not only read the original password of the semiconductor storage device, but also compared it to the password sent by the operating system. In this embodiment, if the sent password was the same as the original one, the password verification was passed. The Firmware would refresh the semiconductor storage device, switch to the common data storage disk, and return the operation result to the operating system. The operating system would perform the corresponding refreshing operation and indicate that the password verification was successful. The user could then perform the conventional data access operation to the semiconductor storage device. If the sent password was different from the original one, the password verification would fail. The Firmware would return the password verification failure operation to the operating system and prompt of password verification failure.

In this embodiment, the user could not perform the standard writing operation for the semiconductor storage device until after the password verification was successfully performed and the common data storage disk was switched to.

The method of the present invention can also be used for the device password modification for the semiconductor storage device. When the user performs the password modification through running the application, the method of the present invention sets the identification mark, such as, 0x123456789 (or other identification marks) by using API functions. The identification mark in the present embodiment has 9 bits, and the tenth bit is the commands and/or data. The identification mark, the password modification command (including password verification command) and the password data (including new password data and password verification data) form the password identification data packet. It is then sent to the semiconductor storage device by the operating system via USB interface. And it is sent to the semiconductor storage device without any limit since the operating system treats it as a common data write file regardless of administration mode.

The invention is further described using 0x123456789 as the identification mark herein. The identification mark can be letters, numbers or character strings of any length. The password verification data packet including the identification mark, 0x123456789, password modification command and password data are sent by the operating system to the semiconductor storage device. The Firmware in the semiconductor storage device firstly identifies the identification mark of the data packet file. If the identification mark is 0x123456789, it indicates that the data in the data packet is user-defined commands and/or data. The Firmware then begins to extract the commands and/or data of password verification and the password modification from the tenth byte. And it also reads the original password of the semiconductor storage device. Next, the Firmware performs the above-mentioned password verification operation. If passes, the Firmware performs the password modification operation, and uses the new password sent by the operating system to modify the original password stored in the semiconductor storage device. The Firmware returns to the operating system the result of the password modification write operation state. And at meantime, the operating system sends the returned result to the application. The application prompts the information that indicates the password is successfully modified. If the password verification operation fails, the user cannot modify the password of the semiconductor storage device, and the Firmware returns to the operating system the operation result of the write operation state, which indicates that the verification of the original password and the modification of the password both fail. The application prompts the information that indicates the password modification files.

In the present embodiment, the semiconductor storage device can be switched to common data storage disk after successful password modification. And the user can perform the standard write operation to it.

## Claims

1. A method for sending commands and/or data to a mobile storage device, comprising configuration of an application running in an operating system, said application being used to send the commands and/or data to the mobile storage device, and the method further comprising the following steps:
1) the said application setting an identification mark for the commands and/or data, said identification mark and the commands and/or data forming a data packet;
2) said application sending to the mobile storage device through the operating system the data packet together with a write command according to the standard write command format provided by the operating system;
3) said mobile storage device receiving from the operating system the write command and the data packet;
4) said mobile storage device interpreting and obtaining the commands and/or data in the data packet based on the identification mark; and
5) said mobile storage device performing the corresponding operation according to the commands and/or data, and sending to said application the operation result via the operating system.

2. The method for sending the commands and/or data to the mobile storage device according to claim 1, wherein the standard write command format is the standard write file function command format provided by the operating system.

3. The method for sending the commands and/or data to the mobile storage device according to claim 1, wherein the command and/or data in the data packet comprise, but not limit to, the device control operation command of the mobile storage device.

4. The method for sending the commands and/or data to the mobile storage device according to claim 1, wherein the application can also send the commands and/or data under a non-administrator mode of said operating system.

5. The method for sending the commands and/or data to the mobile storage device according to claim 1, wherein the mobile storage device comprises, but not limit to USB flash disk, mobile hard disk, semiconductor mobile storage device, MO disk, ZIP disk, and mobile phone.

6. The method for sending the commands and/or data to the mobile storage device according to claim 1, wherein the commands and/or data can be either user-defined command and/or data, or the standard operation commands and/or data.

7. The method for sending the commands and/or data to the mobile storage device according to claim 6, wherein the commands and/or data in the data packet comprise, but not limit to, the password verification command, password modification command, storage capacity obtaining command, device internal information obtaining command, write protect setting command, write protect determining command, switching state determining command, device internal information modification command, data position obtaining command, storage disk switching command, formatting command and storage capacity altering command.

8. The method for sending the commands and/or data to the mobile storage device according to claim 6, wherein the operating system refers to Windows operating system of Microsoft Inc., comprising, but not limits to, Windows 98, Windows Me, Windows 2000 Professional, Windows 2000 Server, Windows 2000 Advance Server, Windows XP Professional, Windows XP Home Edition, Windows XP Server, Windows XP Advance Server, and subsequent operating systems developed by Microsoft Inc.

9. The method for sending the commands and/or data to the mobile storage device according to claim 1, wherein the application can send the commands and/or data under the non-administrator mode of Windows operating system of Microsoft Inc.
